# EUROPEAN PATENT APPLICATION

(11) **EP 1 009 135 A2**
(43) Date of publication of application: **14.06.2000**
(21) Application number: 99309588.4
(22) Date of filing: 30.11.1999
(51) Int. Cl.: H04L 12/64

(54) **Dynamic bandwidth and symmetry allocation of digital subscriber line channels**

(30) Priority: 07.12.1998 US 206423
(71) Applicant: LUCENT TECHNOLOGIES INC., Murray Hill, New Jersey 07974-0636 (US)
(72) Inventor: Aravamudan, Murali, Murray Hill, New Jersey 07974 (US); Narayan Netravali, Arun, Westfield, New Jersey 07090 (US); Szurkowski, Edward Stanley, Maplewood, New Jersey 07040 (US)
(74) Representative: Watts, Christopher Malcolm Kelway, Dr.

(57) **Abstract**

A technique for dynamically adjusting the attributes of a DSL communications channel to satisfy varying bandwidth allocations and/or symmetry requirements. More particularly, the symmetry and/or bandwidth allocation across a communications channel, e.g. a local loop, is dynamically adjusted to satisfy particular communications transmission requirements. The dynamic adjustment of the symmetry and/or bandwidth allocation is made as a function of monitoring of the real-time usage pattern across the communications channel. Further, the dynamic adjustment of the symmetry and/or bandwidth allocation can also be made as a function of a request received from a particular application employing the communications channel. Advantageously, both symmetric and asymmetric DSL applications are satisfied across the same communications channel by dynamically adjusting the available bandwidth and/or symmetry of the communications channel.

## Description

### Field of the Invention

The present invention relates to communications and, more particularly, to high-speed data transmission over various communications networks.

### Background of the Invention

Advances in communications technology and the availability of powerful desktop computer hardware has increased the use of computers to access a variety of publicly available computer networks. For example, the speed of modems, well-known communication devices used for transforming a digital bit stream into an analog signal, has significantly increased thereby allowing for the high-speed exchange of information across communications networks, e.g., the public switched telephone network (PSTN.) Today, a tremendous amount of information is exchanged between individual users located around the world via public communications networks, e.g., PSTN's and the Internet. In addition to the increased volume of communications traffic across PSTN's, there is a dual increase in the content features of today's applications which are available across communications networks. These content rich applications require high bandwidth and high-speed communication transmissions between the provider and the user of the application. Such high-speed communications have placed a significant burden on modem-day PSTN's and the entire telephony infrastructure. More particularly, the well-known local loop, i.e., the connection from the subscriber to the local central office of a local exchange company ("LEC"), has become a main focus and bottleneck for telephone service providers in meeting the ever-increasing communications demands of their subscriber base. A significant challenge to the local service providers is that the conventional local loop infrastructure comprises standard copper cable, i.e., copper loops, which cannot readily support high bandwidth transmission requirements.

Therefore, telecommunications service providers, e.g. LEC's or inter-change carriers ("IXC"), are exploring a number of techniques for increasing the bandwidth capacity of their existing copper loop network infrastructure. One emerging technology which enables high-speed digital data transmission over standard copper loops is so-called Digital Subscriber Line ("DSL") communications. In short, DSL provides for the transmission of high bandwidth capacities between service providers and their subscribers using the existing copper local loop infrastructure. More particularly, DSL is a modem-like technology requiring a DSL configured device at the transmission and receiving location for exchanging a high-speed analog signal which has been overlayed with a digital data stream. In this way, DSL provides for the simultaneous transmission of voice, data, video, and multimedia over the existing telephone network infrastructure. DSL and its potential applications are described in more detail, e.g., by D. L. Waring et al., Digital Subscriber Line Technology Facilitates a Graceful Transition From Copper to Fiber, *IEEE Communications Magazine,* March, 1991, which is hereby incorporated by reference for all purposes.

Advantageously, DSL supports both symmetric and asymmetric bandwidth configurations. As is well-known, symmetric bandwidth applications are those in which the provided channel bandwidth is the same in both directions, e.g., conventional Plain Old Telephone Service ("POTS".) Conversely, asymmetric bandwidth applications are those in which a higher bandwidth is transmitted in one direction (e.g., from the central office to the subscriber) than in the other direction. In particular, so-called Asymmetric Digital Subscriber Line ("ADSL") has emerged as a leading technology for addressing the current explosion in Internet access subscriptions. ADSL is ideal for Internet access because the nature of the communication, in terms of bandwidth, is inherently asymmetric. For example, when subscribers browse the well-known World Wide Web ("WWW") their upstream connection to the WWW requires low bandwidth to facilitate the exchange. However, the downstream transmission from the WWW to the subscriber requires a much higher bandwidth for exchanging the desired content, e.g. multimedia, from the WWW.

Thus, DSL appears to be a technology which will become more pervasive throughout the communications industry and network infrastructure. However, one drawback of conventional types of DSL is that so-called "splitters" are required at each end of the DSL connection to filter, i.e., separate, the analog voice and digital data. This requires subscribers and service providers to incur various costs associated with the installation of such splitters. In response, a new type of DSL technology has been developed, so-called "ADSL lite" or "splitterless ADSL," which eliminates the need for splitters at the subscriber premise and therefore reduces the associated installation costs incurred by the subscriber base. The expected deployment of splitterless ADSL throughout the telecommunications network infrastructure of service providers will significantly enhance their ability to provide a cost effective solution for today's increasing asymmetric communications requirements.

However, even with such enhanced asymmetric bandwidth capabilities, ADSL techniques are not the panacea for solving all of the service provider's bandwidth access requirements. In particular, several important applications, e.g., Internet voice and video telephony, and server hosting, require symmetric bandwidth communications. Furthermore, current DSL transceivers are configured for a single operating mode, e.g., symmetric or asymmetric, including upstream/downstream bandwidth allocation, when manufactured or installed at a subscriber site or at a service provider facility. Such conventional DSL transceivers can adjust their available bandwidth to accommodate local loop conditions. However, this is typically done during a initialization or re-training procedure of the DSL transceiver which was necessitated by a local loop failure or deteriorating error rates. Thus, for all practical purposes, a conventional DSL transceiver is either asymmetric or symmetric depending upon its initial configuration and does not typically change its operating mode thereafter.

Therefore, a need exists for a single DSL technique for dynamically adjusting the bandwidth allocation and/or symmetry of a communications channel to satisfy various symmetric and asymmetric high-speed communications applications.

### Summary of the Invention

The present invention provides a DSL technique for dynamically adjusting the attributes of a DSL communications channel to satisfy varying bandwidth and symmetry requirements. More particularly, in accordance with the invention, the symmetry and/or bandwidth allocation across a communications channel, e.g. a local loop, is dynamically adjusted to satisfy particular communications transmission requirements. In accordance with an embodiment of the invention, the dynamic adjustment of the symmetry and/or bandwidth allocation is made as a function of monitoring the real-time usage pattern across the communications channel. In accordance with a further embodiment of the invention, the dynamic adjustment of the symmetry and/or bandwidth allocation is made as a function of a request received from a particular application employing the communications channel. Advantageously, in accordance with the invention, both symmetric and asymmetric DSL applications are satisfied across the same communications channel by dynamically adjusting the available bandwidth and/or symmetry of the communications channel.

### Brief Description of the Drawings

FIG. 1 shows a single loop DSL communications system configured in accordance with the principles of the invention;
FIG. 2 shows an expanded configuration of the DSL transceivers of FIG. 1 in accordance with the principles of the invention.
FIG. 3 shows a series of communications scenarios wherein the communications channel shown in FIG. 1 and 2 is dynamically adjusted in accordance with the invention;
FIG. 4 is a flowchart of illustrative operations performed in accordance with the invention for dynamically adjusting the bandwidth allocation and/or symmetry of a communications channel;
FIG. 5 shows a multiple loop DSL communications system, configured in accordance with the principles of the invention, for dynamically adjusting the attributes of the DSL communications channels to satisfy varying bandwidth and symmetry requirements;
FIG. 6 shows illustrative dynamic communications channel configurations in the event of a communications channel failure in the multiple loop DSL communications system of FIG. 5; and
FIG. 7 shows an illustrative DSL terminal for applying dynamic symmetry and bonding control to communications channels in accordance with the invention.

### Detailed Description

The present invention provides a DSL technique for dynamically adjusting the attributes of a DSL communications channel to satisfy varying bandwidth and symmetry requirements. More particularly, in accordance with the invention, the symmetry and/or bandwidth allocation across a communications channel, e.g. a local loop, is dynamically adjusted to satisfy particular communications transmission requirements. In accordance with an embodiment of the invention, the dynamic adjustment of the symmetry and/or bandwidth allocation is made as a function of monitoring of the real-time usage pattern across the communications channel. In accordance with a further embodiment of the invention, the dynamic adjustment of the symmetry and/or bandwidth allocation is made as a function of a request received from a particular application employing the communications channel. Advantageously, in accordance with the invention, both symmetric and asymmetric DSL applications are satisfied across the same communications channel by dynamically adjusting the available bandwidth and/or symmetry of the communications channel.

It should be noted that for clarity of explanation, the illustrative embodiments described herein are presented as comprising individual functional blocks or combinations of functional blocks. The functions these blocks represent may be provided through the use of either shared or dedicated hardware, including, but not limited to, hardware capable of executing software. Illustrative embodiments may comprise digital signal processor ("DSP") hardware and/or software performing the operations discussed below. Further, in the claims hereof any element expressed as a means for performing a specified function is intended to encompass any way of performing that function, including, for example, a) a combination of circuit elements which performs that function; or b) software in any form (including, therefore, firmware, object code, microcode or the like) combined with appropriate circuitry for executing that software to perform the function. The invention defined by such claims resides in the fact that the functionalities provided by the various recited means are combined and brought together in the manner which the claims call for. Applicants thus regard any means which can provide those functionalities as equivalent as those shown herein.

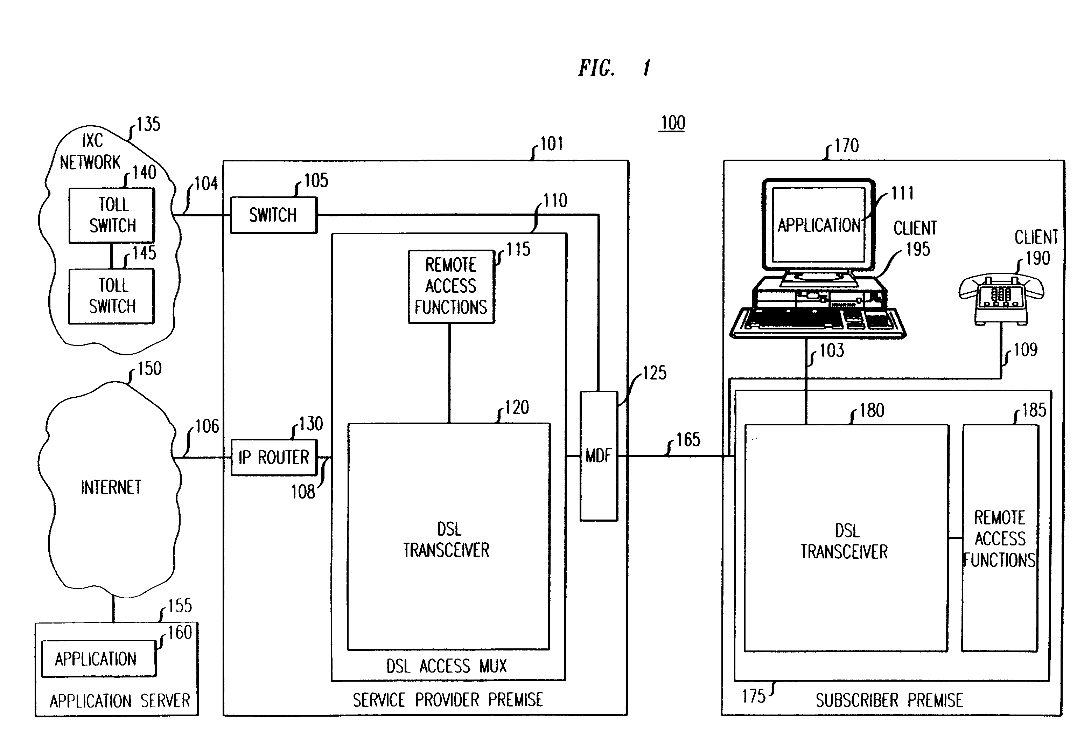

FIG. 1 shows a single loop DSL communications system 100 configured in accordance with the principles of the invention. More particularly, subscriber premise 170 comprises client 190 and client 195 which support the execution of particular applications, e.g., application 111. As will be appreciated such applications include browsing the WWW, Internet telephony, video conferencing, and the like. As illustratively shown, client 195 is a personal computer connected to DSL router 175 via a standard Ethernet connection 103, and client 190 is a conventional telephone connected to communications channel 165 via a standard POTS telephone line 109. As will be appreciated, such clients can be any information appliance which requires the exchange of information in support of some application. Subscriber premise 170 further includes DSL router 175 which routes incoming/outgoing communications across communications channel 165, e.g., a local copper loop. DSL router 175 further comprises remote access functions 185 and DSL transceiver 180. Remote access functions 185 perform various high level protocol operations, e.g., packet multiplexing and authentication, necessary for establishing and maintaining communications between subscriber premise 170 and service provider premise 101. In accordance with the invention, DSL transceiver 180 facilitates the dynamic adjusting of the attributes of a communications channel (illustratively, communications channel 165) to satisfy varying bandwidth requirements. More particularly, in accordance with the invention, the symmetry and/or bandwidth allocation across communications channel 165 is dynamically adjusted to satisfy particular communications transmission requirements between subscriber premise 170 and service provider premise 101. Further details regarding the configuration of DSL transceiver 180 and the operations for achieving the dynamic adjustment in symmetry and/or bandwidth allocation, in accordance with the invention, are discussed below.

As described previously, DSL communications require a DSL communications device, e.g., DSL transceiver 180 and DSL transceiver 120, at both ends of the communications channel. Thus, service provider premise 101, e.g., a LEC central office, is configured with DSL transceiver 120 and remote access functions 115 which form an integral part of DSL access multiplexer 110. As will be appreciated, while DSL transceivers 180 and 120, respectively, are illustratively shown in hardware block diagram form, such DSL transceivers may be implemented in hardware, software, or a combination of hardware/software for delivering the dynamic adjusting of the communications attributes of a communications channel in accordance with the invention as described herein.

Service provider premise 101 further includes a conventional main distribution frame ("MDF") 125, telecommunications switch 105 and IP router 130. As is well-known, MDF 125 and telecommunications switch 105 are employed by a telecommunications service provider for distributing and completing telecommunications traffic from their subscribers. For example, a subscriber using client 190 places a long distance call which is routed by service provider premise 101, over trunk 104, to inter-exchange carrier network 135 which completes the long distance call using toll switches 140 and 145 to its ultimate destination in a conventional manner.

In addition, IP router 130 is employed by service provider premise 101 for facilitating communications over channels 106 and 108 to public computer networks, e.g., Internet 150. Thus, illustratively, client 195, e.g., a personal computer, may access certain web pages on the WWW using application 111, e.g., a web browser. Web browsers are well-known software application programs (e.g., Netscape® v. 5.0, available from Netscape Communications) which enable a user to traverse the WWW and access the vast amount of information available throughout the WWW. As will be readily understood, the communications stream exchanged in this embodiment is via a conventional Transfer Control Protocol/Internet Protocol ("TCP/IP") connection. As is well-known, TCP/IP is the protocol which is used in describing the way in which information is transferred across the Internet. Essentially, TCP/IP separates information into individual packets and routes these packets between the sending computer, e.g., server, and the receiving computer, e.g., client. TCP/IP and Internet communications are discussed in more detail, e.g., by D. Corner., *Internetworking with TCP/IP,* Third edition, Prentice-Hall, Englewood Cliffs, NJ, 1995. Thus, application 111 receives an input request from the user of client 195 and attempts to locate the information on the WWW by establishing a connection through Internet 150 with the appropriate WWW resource, e.g., application 160, residing on application server 155. In such an illustrative downstream intensive communication, in accordance with the invention, the symmetry and/or bandwidth allocation across channel 165, is dynamically adjusted to satisfy the particular communications transmission requirements between subscriber premise 170 and service provider premise 101.

In accordance with the preferred embodiment of the invention, ADSL lite (alternatively referred to herein as "splitterless ADSL") is applied across channel 165 to form the single communications channel for the exchange of communications between subscriber premise 170 and service provider premise 101. As will be appreciated, the principles of the invention apply to any DSL-type transmission where the dynamic, i.e., "on-the-fly", adjustment of bandwidth allocation and/or symmetry of the communications channel is desired. Typically, in accordance with the preferred embodiment, when channel 165 is so configured as an ADSL lite channel the so-called "high-speed" direction (i.e., "downstream" from service provider premise 101 to subscriber premise 170) data rate bandwidth ranges from 1 Mbits/sec to 2 Mbits/sec, and the so-called "slow-speed" direction (i.e., "upstream" from subscriber premise 170 to service provider premise 101) data rate bandwidth ranges from 64 Kbits/sec to 384 Kbits/sec.

In accordance with the invention, it is the upstream and downstream bandwidths which are dynamically adjusted from both a bandwidth rate (i.e., increasing or decreasing one or both bandwidths) and symmetry (i.e., increasing or decreasing the symmetry of the channel) perspective. For example, a user of client 195 may be engaging in the downloading of certain files, e.g., files containing large amounts of video content, from application server 155 which due to their large file size require a continuously high downstream bandwidth. During the same time interval, the amount of upstream communications, e.g., voice telephony, from subscriber premise 170 is low. Advantageously, in accordance with an embodiment of the invention, DSL transceiver 180 continually monitors the incoming and outgoing communications traffic across communications channel 165 to and from DSL router 175. In this way, DSL transceiver 180 can measure or observe particular characteristics of communications channel 165, e.g., the traffic in/out of DSL router 175, and initiate dynamic, i.e., real-time, adjustments to the bandwidth allocation of communications channel 165 to optimize the overall performance of the channel.

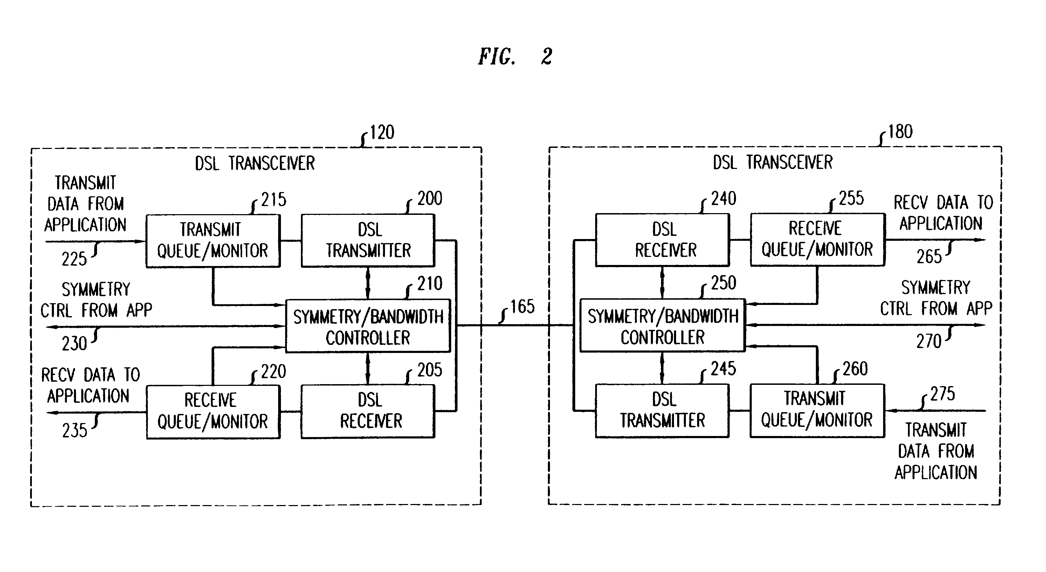

FIG. 2 shows an expanded configuration of DSL transceivers 120 and 180, respectively, and further illustrates the principles of the invention. In particular, in accordance with this embodiment of the invention, the real-time measuring and observing of communications channel 165 by DSL transceiver 120 and DSL transceiver 180 is facilitated by symmetry/bandwidth adjuster 210 and symmetry/bandwidth adjuster 250, respectively. That is, symmetry/bandwidth adjuster 210, illustratively, is a digital signal processor containing particular firmware for enabling DSL transceiver 180 to observe communications channel 165 and dynamically execute bandwidth allocation and/or symmetry adjustments in conjunction with DSL transmitter 200 and DSL receiver 205 in accordance with the invention. In a similar fashion, DSL transceiver 180 utilizes symmetry/bandwidth adjuster 250, DSL receiver 240 and DSL transmitter 245 to apply the bandwidth allocation and/or symmetry adjustments across communications channel 165. While the present embodiment of FIG. 2 illustratively shows symmetry/bandwidth adjuster 210 and symmetry/bandwidth adjuster 250 incorporated within their respective DSL transceiver, it will be appreciated that, further embodiments of the invention include arrangements wherein the symmetry/bandwidth adjuster is implemented separately from the DSL transceivers, e.g., in a stand-alone DSP or software executed in a processor.

Turning our attention again to FIG. 2, the symmetry/bandwidth control aspects of the invention will now be discussed. For clarity of explanation, the illustrative configuration shown in FIG. 2 includes a single communications channel, i.e., communications channel 165, although the principles of the inventions as described below apply equally to further embodiments which include multiple communications channels. In accordance with the preferred embodiment of the invention, DSL transmitters 200 and 245, respectively, modulate the data to be transmitted onto communications channel 165 and between two locations, e.g., subscriber premise 170 and service provider premise 101. Conversely, DSL receivers 205 and 240, respectively, demodulate the signals being transmitted across communications channel 165 and between two locations to recover the transmitted data. In accordance with the preferred embodiment of the invention, transmit queue/monitor 215 and 260, respectively, store data from an application, e.g., application 111, presently waiting to be transmitted by DSL transmitter 200 and 245, respectively. Further, transmit queue/monitor 215 and 260 measure the actual transmit data rate from their respective DSL transceiver. Similarly, in accordance with the preferred embodiment of the invention, receive queue/monitor 220 and 255, respectively, store data for an application, e.g., application 111, presently waiting to be processed by the application. In addition, receive queue/monitor 220 and 255 measure the actual receive data rate at their respective DSL transceiver.

In accordance with the preferred embodiment of the invention, during the initialization of communications channel 165, the channel is set to a default symmetry value which is determined as a function of the measured characteristics of the channel and well-known installation parameters. For example, a commercial subscriber to such a communications channel may have a default symmetry setting of 50% upstream and 50% downstream, i.e., a symmetric channel. Typically, such commercial subscribers employ a symmetric channel due to their usage patterns which transmit and receive approximately equal amounts of data over the communications channel. In contrast, a residential subscriber to such a communications channel may have a default symmetry setting of 80% downstream and 20% upstream since these subscribers typically are expected to download, e.g., Web surfing, more data over the channel than they transmit. As will be appreciated, the default symmetry settings can be communicated to the relevant symmetry/bandwidth controller, e.g., symmetry/bandwidth controller 210 or 250, through software commands during channel initialization, or so-called "hard" configuration inputs, e.g., switches, within the DSL transceivers. In accordance with the preferred embodiment, symmetry/bandwidth controller 210 sets the requisite communications channel parameters in DSL transmitter 200 and DSL receiver 205 to establish the default symmetry configuration. Similarly, symmetry/bandwidth controller 250 sets the requisite communications channel parameters in DSL transmitter 245 and DSL receiver 240 to establish the default symmetry configuration in DSL transceiver 180.

Of course, during the actual operation of communications channel 165, the transmission load across the channel may change dramatically, e.g., the subscriber may be transmitting more data than expected while receiving less data. That is, the desired symmetry of the communications channel is different than the presently configured symmetry. Various aspects of the present invention are directed at alleviating this condition by providing a technique for dynamically adjusting the attributes of the communications channel to satisfy varying bandwidth and symmetry requirements.

More particularly, in accordance with the preferred embodiment of the invention, transmit queue/monitor 215 and 260, respectively, continuously measure the so-called fill level of their respective queues. That is, the fill level being impacted by the data presently awaiting transmission by a particular application, e.g. transmit data from application 225 or transmit data from application 275. If the fill level of these transmit queues exceeds a predetermined threshold level, symmetry/bandwidth controller 210 and 250 will examine the data rate of their associated receive queue/monitor, i.e., receive queue/monitor 220 and 255, respectively. As will be appreciated, the threshold level can be determined as a function of so-called "high water" levels and/or "low water" levels, where high water levels typically exceed 75% of the total queue capacity, and low water levels typically are 25% or less of the total queue capacity. If a determination is made that the current receive rate (e.g., receive data to application 235 or receive data to application 265) is less than the current communications channel rate, i.e., the receive channel is not being fully utilized, symmetry/bandwidth controller 210 and/or 250 will, in accordance with the invention, reconfigure their respective DSL transmitter, i.e., DSL transmitter 200 and/or 245, and DSL receiver, i.e., DSL receiver 205 and/or 240, for a more efficient use of communications channel 165. In accordance with the preferred embodiment, such reconfiguration includes setting new parameter values, e.g., upstream and/or downstream symmetry, in the DSL transmitter and receiver. Advantageously, in accordance with the invention, both symmetric and asymmetric DSL applications are satisfied across the same communications channel by dynamically adjusting the available bandwidth and/or symmetry of the communications channel.

Further, in accordance with the preferred embodiment of the invention, thrashing (i.e., rapid short-term changes in parameters), a well-known feedback and control issue is avoided through the use of averaging and filtering. That is, the queue fill levels and data rates are averaged/filtered prior to being reported to the symmetry/bandwidth controllers. Thus, in accordance with the preferred embodiment, symmetry/bandwidth controller 210 and 250, respectively, do not attempt a reconfiguration of communications channel 165 each time their respective transmit queue level exceeds the threshold level. Instead, the averaging/filtering of the fill levels and data rates provides that the level be exceeded for some continuous time period, e.g., a few seconds, before any reconfiguration of communications channel 165 is initiated in accordance with the principles of the invention.

In accordance with the above-described embodiment, the trigger for the reconfiguration of the communications channels is from the DSL transceiver itself, i.e., from the monitoring of the fill levels and data rates. However, in further embodiments of the invention, the reconfiguration operations from the symmetry/bandwidth controller are triggered directly from particular applications. In particular, an application, e.g., application 111, can issue commands directly to the symmetry/bandwidth controller (see, symmetry control signal from application 230 or symmetry control signal from application 270) to determine the current configuration and status of communications channel 165. After receiving requested status information, the application can issue further commands to effect a desired reconfiguration of the communications channel. This further embodiment of the invention provides applications with the ability to ensure that sufficient bandwidth is allocated in the requisite direction, i.e., upstream or downstream, prior to the execution of particular operations, e.g., video conferencing or telephony applications, which are known to have special transmission characteristics.

For example, in this further embodiment of the invention, the dynamic adjustments in the bandwidth allocation and/or symmetry of channel 165 occur in real-time as a function of particular requests from applications, e.g. application 111 executing on client 195. Illustratively, (turning our attention briefly back to FIG. 1) during the execution of application 111 on client 195, application 111 can request changes of the operating parameters of DSL transceiver 180 which trigger dynamic adjustments in the bandwidth allocation and/or symmetry of communications channel 165. More particularly, such a request from application 111 is facilitated by a library routine (i.e., a function or subroutine) accessible by client 195 which implements a DSL application programming interface. As is well-known, an application program interface ("API") is a defined set of functions, typically provided by an operating system or library, for use by an application in performing a desired feature, e.g., telephony or messaging. In accordance with this embodiment of the invention, the DSL API provided to client 195 provides applications executing on client 195 with the ability to initiate changes in the operating parameters of DSL transceiver 180 for real-time adjustments in the bandwidth allocation and/or symmetry across communications channel 165, in accordance with the invention.

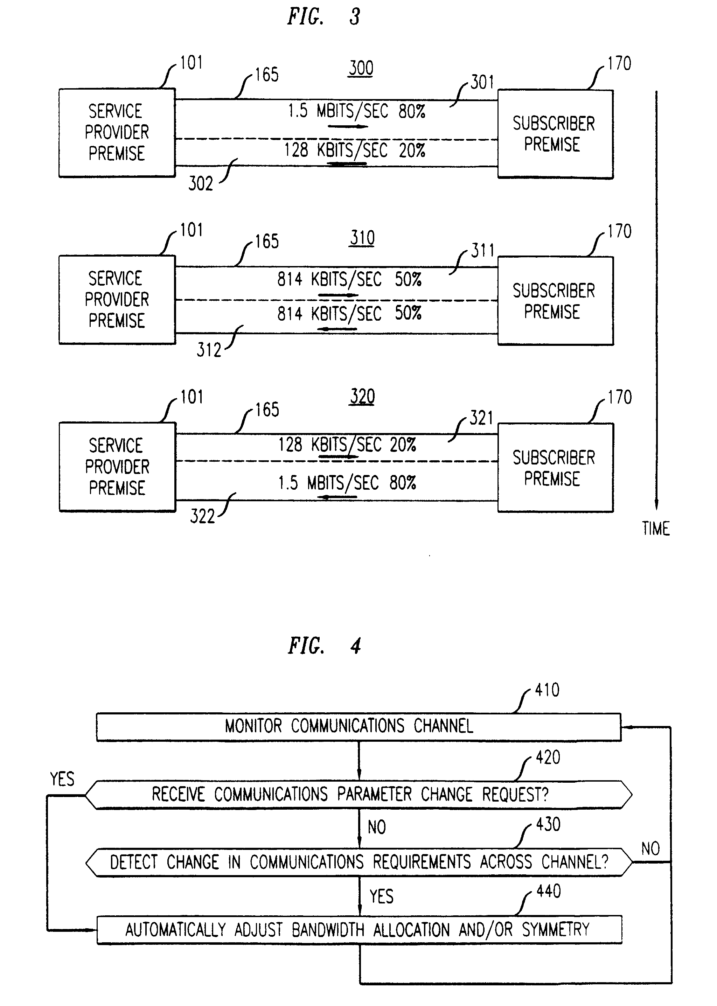

To further illustrate the various aspects of the invention as described above, an illustrative ADSL lite communications exchange between subscriber premise 170 and service provider premise 101 will be now discussed. FIG. 3 shows a set of communications scenarios, 300, 310, and 320, respectively, exchanged over time across communications channel 165 between subscriber premise 170 and service provider premise 101. As shown, communications scenario 300 is initially allocated asymmetrically, in accordance with conventional ADSL lite data rates, with downstream communications rate 301 (i.e., from service provider premise 101 to subscriber premise 170) of 1.5 Mbits/sec and an upstream communications rate 302 (i.e., from subscriber premise 170 to service provider premise 101) of 128 Kbits/sec. In accordance with the invention, as communications continue over time between subscriber premise 170 and service provider premise 101, DSL transceiver 180 is illustratively used, as described previously, to monitor the communications exchange and adjust the bandwidth allocation in accordance with the observed requirements. For example, DSL transceiver 180 may observe that its transmit queues are near capacity, indicating that there is presently a high amount of continuous transmission from subscriber premise 170 to service provider premise 101. That is, upstream communications rate 302 is near or at capacity. DSL transceiver 180 further observes that the actual received communications rate from service provider premise 101 is quite low. That is, downstream communications rate 301 is far below capacity. Thus, in accordance with the invention, DSL transceiver 180 will dynamically adjust the bandwidth allocation across communications channel 165 to improve the communications exchange and more efficiently use the available bandwidth.

For example, DSL transceiver 180 may adjust the asymmetric allocation shown in scenario 300 to a full symmetric allocation as shown in communications scenario 310. In communications scenario 310, communications channel 165 has been dynamically adjusted, in accordance with the invention, to have equal downstream communications rate 311 and upstream communications rate 312 of 814 Kbits/sec. Advantageously, our invention provides for the increased utilization of a communications channel through dynamic bandwidth and/or symmetry adjustments. Continuing with the illustrative scenarios shown in FIG. 3, communications scenario 320 further illustrates the import of the invention. That is, communications channel 165 has been further dynamically adjusted as a function of the real-time communications observation and adjusting, illustratively, by DSL transceiver 180. As shown, communications channel 165 is now allocated in an asymmetric allocation wherein downstream communication rate 321 is decreased to 128 Kbits/sec and upstream communications rate 322 is increased to 1.5 Mbits/sec. Thus, communications channel 165 now has a so-called reverse asymmetric allocation as compared to that of the initial allocation of communications scenario 300.

As will be appreciated, while the above discussion focused on subscriber premise 170 and DSL transceiver 180, the principles of the invention are equally applicable in service provider premise 101 which is configured with DSL transceiver 120 which operates in accordance with the invention as previously discussed.

FIG. 4 is a flowchart of illustrative operations performed, in accordance with the invention, for dynamically controlling the bandwidth allocation of a communications channel. More particularly, the communications channel is continually monitored (block 410) for determining the real-time bandwidth allocation and symmetry requirements between, e.g., a subscriber premise and service provider premise, as described above. If a communications parameter change request is received (block 420) from a particular application the change request is immediately processed, in accordance with the invention, to dynamically adjust the bandwidth allocation and/or symmetry (block 440.) If no change request is received, the communications channel is continually monitored to detect a change in the communications requirements across the communications channel (block 430.) In accordance with the invention, if the communications loading across the channel is such that certain adjustments to the bandwidth and/or symmetry will more efficiently utilize the channel's capacity, these adjusts are dynamically made (block 440), e.g., by DSL transceiver 180, as described previously.

Advantageously, the invention provides for dynamically adjusting the symmetry and/or bandwidth allocation across a communications channel as a function of the particular communications transmission requirements. Thus, the total capacity of the communications channel is more efficiently used through such real-time bandwidth adjustments. Of course, such adjustments are only effective so long as the communication channel does not itself incur a transmission fault. That is, if the channel itself fails all communications exchanged across the channel also fail. It is the recovery from such a channel failure problem and other problems that the invention set forth in our co-pending, commonly assigned patent application entitled "Dynamic Configuration of Digital Subscriber Line Channels," Application Serial No. , filed on even date herewith, is directed.

More particularly, in accordance with the invention of our above-cited co-pending patent application, a technique is described which advantageously facilitates the dynamic recover from faults in one or more communication channels, i.e., loops. That is, in accordance with the preferred embodiment of the invention, the dynamic adjustment of DSL bandwidth allocation and/or symmetry aspects of the invention of the present application are combined with an dynamic bonding mechanism that, in cases of single or multiple loop failures, creates the appearance of a single higher-bandwidth channel by combining and/or distributing the communications traffic across the still available physical communications channels. As will be appreciated by those skilled in the art, the bonding of multiple low bitrate channels to obtain higher apparent communications speeds, so-called inverse multiplexing, is well-known. See, for example, William A. Flanagan, *T-1 Networking,* Telcom Books, 1997, p. 129. However, we have realized that by combining our invention for dynamically adjusting the symmetry and/or bandwidth allocation across a communications channel as a function of the particular communications transmission requirements, with the bonding of asymmetric channels, we have discovered a novel technique for the real-time bonding of asymmetric channels to produce a fully symmetric channel. In this way, the invention of our co-pending application, provides a technique which advantageously facilitates the dynamic recovery from faults in one or more communication channels as will now be further discussed below.

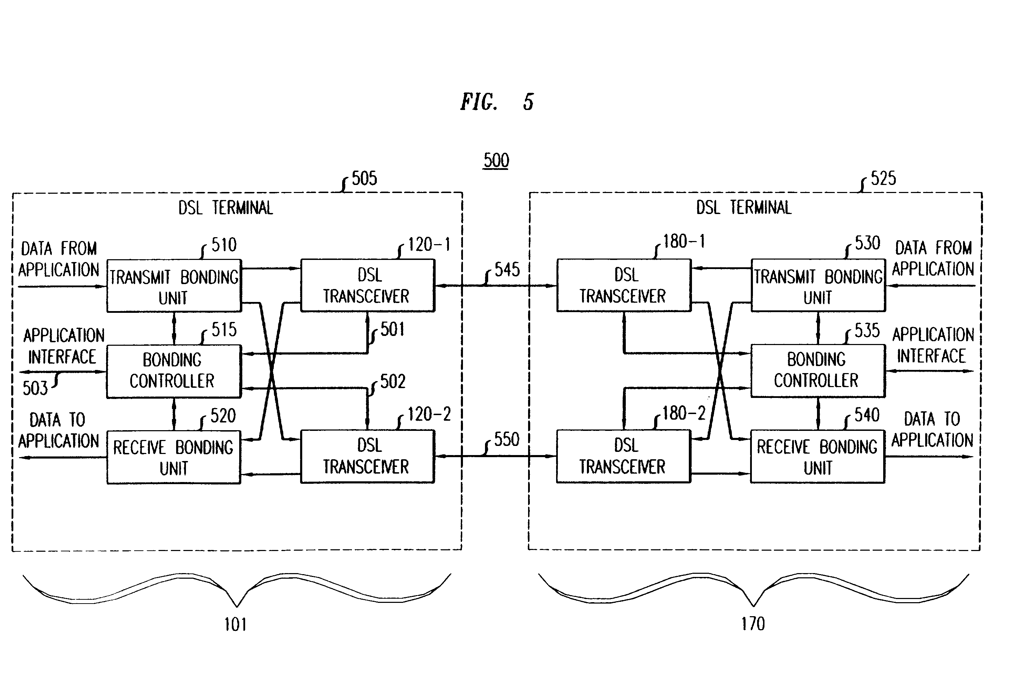

In particular, FIG. 5 shows multiple loop DSL communications system 500 configured in accordance with the principles of the invention for dynamically adjusting the attributes of a DSL communications channel to satisfy varying bandwidth and symmetry requirements. A first communications channel 545, e.g., a local loop connecting service provider premise 101 and subscriber premise 170, is a initially configured illustratively as a standard ADSL channel having a greater downstream bandwidth, e.g., 1.5 Mbits/sec than upstream bandwidth, e.g., 128 Kbits/sec. A second communications channel 550 is a initially configured illustratively as a so-called reverse ADSL channel having a greater upstream bandwidth, e.g., 1.5 Mbits/sec than downstream bandwidth, e.g., 128 Kbits/sec. In accordance with the embodiment of FIG. 5, the two communications channels connect DSL terminal 505 and DSL terminal 525 which, illustratively, reside within service provider premise 101 and subscriber premise 170, respectively. As shown in FIG. 5, DSL terminal 505 and DSL terminal 525 each include a pair of DSL transceivers, i.e., 120-1, 120-2, 180-1, and 180-2, (configured the same as DSL transceiver 120 and DSL transceiver 180 of FIG. 2) which are each configured, in accordance with the present invention, for dynamically adjusting the symmetry and/or bandwidth allocation across a communications channel as a function of the particular communications transmission requirements, as described above in detail and as shown in FIG. 2. Further, in accordance with the dynamic channel configuration invention of our co-pending application, DSL terminal 505 further includes transmit bonding unit 510, receive bonding unit 520 and bonding controller 515 which, working in conjunction with DSL transceiver 120-1 and DSL transceiver 120-2, advantageously facilitate the dynamic recover from faults in one or more communication channels, e.g., communications channel 545 or communications channel 550.

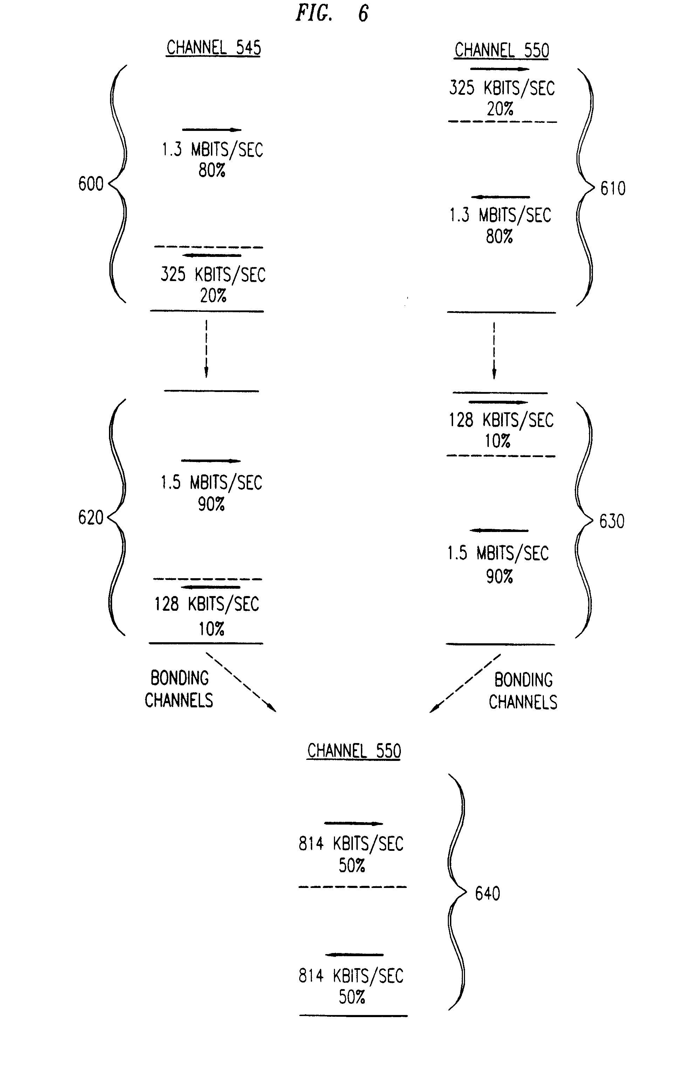

In particular, if communications channel 545 or communications channel 550 experience a failure, focusing our attention, illustratively, on DSL terminal 505, transmit bonding unit 510, receive bonding unit 520, and bonding controller 515 facilitate the combining and/or distribution of communications traffic across the available channel(s) to dynamically reconfigure a single logical, higher-bandwidth channel to carry the transmission until such time that the failed channel is operational. For example, as shown in the illustrative embodiments of FIG. 5 and FIG. 6, communications channel 545 is configured to receive 1.3 Mbits/sec and transmit 325 Kbits/sec (see, FIG. 6, channel configuration 600 having an 80/20 asymmetry) while communications channel 550 is configured to receive 325 Kbits/sec and transmit 1.3 Mbits/sec (see, FIG. 6, channel configuration 610 having a 20/80 asymmetry.) However, suppose the desired bonded configuration is 50% upstream and 50% downstream, i.e., fully symmetric. In accordance with the invention, bonding controller 515 issues commands to DSL transceiver 120-1 to reconfigure communications channel 545 to 90% downstream/10% upstream (see, FIG. 6, channel configuration 620.) Further, bonding controller 515 issues commands to DSL transceiver 120-2 to reconfigure communications channel 550 to 10% downstream/90% upstream (see, FIG. 6, channel configuration 630.) Thereafter, bonding controller 515 in conjunction with transmit bonding unit 510 and receive bonding unit 520 will bond the reconfigured channels using inverse multiplexing to yield a single channel with the desired fully symmetric bandwidth (see, FIG. 6, channel configuration 640.) The details of such dynamic reconfiguration utilizing the channel bonding and DSL transceivers of the invention will now be discussed.

As described previously, each of the communication channels to be bonded, e.g., communications channels 545 and 550, are initialized with a default symmetry configuration. After initialization of the channels, bonding controller 515 queries the state of channel 545 and channel 550 via connections 501 and 502 to DSL transceivers 120-1 and 120-2, respectively. In accordance with the preferred embodiment of the invention, after receiving the query results, bonding controller 515 issues commands, to the DSL transceivers, for reconfiguration of the communication channels for bonded operations. After the initial configuration and bonding of channels 545 and 550 is established, bonding controller 515 continues to monitor the state of each channel. If one of the channels fails, or becomes partially impaired in some other way, bonding controller 515, in accordance with the invention, reconfigures the remaining communications channels, e.g., channel 550, to preserve the desired symmetry, but with a lower bandwidth.

In particular, continuing with the illustrative example of FIG. 6, suppose now that communications channel 545 was configured for 90% downstream/10% upstream, and communications channel 550 was configured for 10% downstream/90% upstream. Further, illustratively, suppose that communications channel 545 experiences a complete failure. In such an illustrative scenario, bonding controller 515, in accordance with the invention, will issue commands to DSL transceiver 120-2 to reconfigure communications channel 550 to 50% downstream/50% upstream (see, FIG. 6, channel configuration 640) thereby preserving the symmetry but lowering the effective bandwidth. Further, in accordance with a further embodiment of the invention, bonding controller 515 may inform, via application interface 501, the particular application currently executing that a reconfiguration/channel recovery operation has occurred. Thus, the application can thereafter take any necessary steps to adjust its execution in recognition of the reduced bandwidth across the communication channel(s).

As will be appreciated, while the above discussion of FIG. 5 and FIG. 6 focused particularly on subscriber premise 101 and DSL terminal 505, the principles of the invention are equally applicable in subscriber premise 170 which is configured with DSL terminal 525 having DSL transceiver 180-1 and 180-2, transmit bonding unit 530, bonding controller 535, and receive bonding unit 540, for providing the bonding together of asymmetric channels to dynamically produce a single, fully symmetric communications channel as described previously.

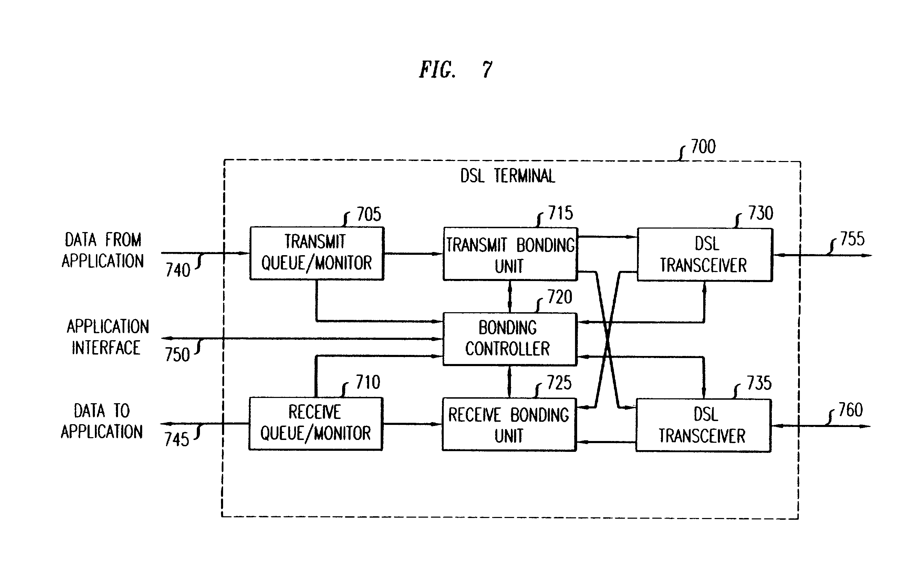

In a further embodiment of the invention, the dynamic symmetry and bonding control are provided in a so-called "loop" independent fashion. That is, the transmit queue/monitor and receive queue/monitor as described above are each located between the application and the transmit and receive bonding units. More particularly, FIG. 7 shows DSL terminal 700 configured in accordance with this further embodiment of the invention. DSL terminal 700 is configured with transmit queue/monitor 705 and receive queue/monitor 710 separate from DSL transceiver 730 and DSL transceiver 735. In accordance with this embodiment, transmit queue/monitor 705 receives data to be transmitted from an executing application (see, interconnection 740) and receive queue/monitor 710 holds data destined for the executing application (see, interconnection 745.) As so configured, transmit queue/monitor 705 and receive queue/monitor 710 are accessed directly by bonding controller 720 through transmit bonding unit 715 and receive bonding unit 725, respectively. Thus, in accordance with this embodiment, bonding controller 720 monitors the status of transmit queue/monitor 705 and receive queue/monitor 710 to effect the dynamic reconfiguration/bonding of particular communications channels, e.g., communications channel 755 or 760. In addition to monitoring, bonding controller 710 can receive commands directly from the application (see, application interface 750) to also trigger the dynamic reconfiguration/bonding in accordance with the principles of the invention.

As detailed above, the present invention can be embodied in the form of methods and apparatuses for practicing those methods. The invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The invention can also be embodied in the form of program code, for example, in a storage medium, loaded into and/or executed by a machine, or transmitted over some transmission medium, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

The foregoing merely illustrates the principles of the present invention. Therefore, the invention in its broader aspects is not limited to the specific details shown and described herein. Those skilled in the art will be able to devise numerous arrangements which, although not explicitly shown or described herein, embody those principles and are within their scope.

## Claims

1. A Digital Subscriber Line (DSL) communications method comprising:
monitoring a DSL communications channel, the DSL communications channel having a initial bandwidth allocation and a initial symmetry allocation, the DSL communications channel carrying a exchange of communications between at least two locations;
detecting a change in a communications rate of the exchange of communications between the at least two locations; and
dynamically adjusting the initial bandwidth allocation or the initial symmetry allocation of the DSL communications channel as a function of the detected change in the communications rate.

2. The DSL communications method of claim 1 wherein the initial symmetry allocation is a symmetric allocation.

3. The DSL communications method of claim 2 wherein the dynamically adjusting operation adjusts the initial symmetry allocation to a asymmetric allocation.

4. The DSL communications method of claim 3 wherein the DSL communications channel is part of a local loop.

5. A method for exchanging communications across a DSL communications channel, the DSL communications channel connecting at least one subscriber premise with at least one telecommunications service provider, the method comprising:
initializing the DSL communications channel with a bandwidth allocation and a symmetry allocation;
exchanging a communication between the at least one subscriber premise and the at least one telecommunications service provider, the communication having a communications rate;
monitoring the communication between the subscriber premise and the telecommunications service provider;
detecting a change in the communications rate; and
dynamically adjusting the initial symmetry allocation of the DSL communications channel as a function of the detected change in the communications rate.

6. The method of claim 5 further comprising:
dynamically adjusting the initial bandwidth allocation of the DSL communications channel as a function of the detected change in the communications rate.

7. The method of claim 6 wherein the communication comprises a voice signal component and a data signal component.

8. The method of claim 5 wherein the dynamically adjusting operation is initiated by a command from a communications device within the subscriber premise.

9. The method of claim 8 wherein the command includes a desired symmetry allocation for the DSL communications channel.

10. The method of claim 5 wherein the initial symmetry allocation is a symmetric allocation.

11. The method of claim 10 wherein the dynamically adjusting operation adjusts the initial symmetry allocation to a asymmetric allocation.

12. A DSL transceiver comprising:
a transmitter for transmitting a DSL signal across a communications channel, the communications channel having a plurality of communications characteristics, the plurality of characteristics including at least one bandwidth allocation and at least one symmetry allocation;
a receiver for receiving the DSL signal from the communications channel;
a transmit queue for storing data awaiting transmission by the transmitter;
a receive queue for storing data received by the receiver;
a controller for monitoring the characteristics of the communications channel, and for dynamically adjusting the bandwidth allocation or the symmetry allocation as a function of a change in the characteristics of the communications channel.

13. The DSL transceiver of claim 12 wherein the controller dynamically adjusts the symmetry allocation to a asymmetric channel.

14. The DSL transceiver of claim 12 wherein the controller monitors a level of the receive queue in performing the dynamically adjusting operation.

15. The DSL transceiver of claim 14 wherein the controller monitors a level of the transmit queue in performing the dynamically adjusting operation.

16. A communications system comprising:
a first communications device, the first communications device having a transmitter for transmitting a DSL signal across a communications channel, the communications channel having a plurality of communications characteristics, the plurality of characteristics including at least one bandwidth allocation and at least one symmetry allocation, and a controller for monitoring the characteristics of the communications channel, and for dynamically adjusting the bandwidth allocation or the symmetry allocation as a function of a change in the characteristics of the communications channel; and
a second communications device, the second communications device having a receiver for receiving the DSL signal across the communications channel, and a controller for monitoring the characteristics of the communications channel, and for dynamically adjusting the bandwidth allocation or the symmetry allocation as a function of the change in the characteristics of the communications channel.

17. The communications system of claim 16 wherein the communications channel connects a telecommunications service provider premise and a subscriber premise.

18. The communications system of claim 17 wherein the first communications device is located at the subscriber premise and the second communications device is located at the telecommunications service provider premise.

19. The communications system of claim 18 wherein the first communications device is connected to a computer used by a subscriber for accessing a public network.

20. The communications system of claim 19 wherein the second communications device is connected to a communications switch.

21. A machine-readable medium having stored thereon a plurality of instructions, the plurality of instructions including instructions that, when executed by a machine, cause the machine to perform a communications method of monitoring a DSL communications channel, the DSL communications channel having a initial bandwidth allocation and a initial symmetry allocation, the DSL communications channel carrying a exchange of communications between at least two locations, detecting a change in a communications rate of the exchange of communications between the at least two locations, and dynamically adjusting the initial bandwidth allocation or the initial symmetry allocation of the DSL communications channel as a function of the detected change in the communications rate.

22. The machine-readable medium of claim 21 wherein the initial symmetry allocation is a symmetric allocation.

23. The machine-readable medium of claim 22 wherein the dynamically adjusting operation adjusts the initial symmetry allocation to a asymmetric allocation.

24. The machine-readable medium of claim 21 wherein the DSL communications channel connects a telecommunications service provider premise and a subscriber premise.
